# EUROPEAN PATENT APPLICATION

(11) **EP 4 333 119 A1**
(43) Date of publication of application: **06.03.2024**
(21) Application number: 23172023.6
(22) Date of filing: 08.05.2023
(51) Int. Cl.: H01M 4/36, H01M 4/505, H01M 4/525, H01M 4/58, H01M 4/62

(54) **CATHODE MATERIAL AND PREPARATION METHOD THEREOF**

(30) Priority: 01.09.2022 TW 111133201
(71) Applicant: Advanced Lithium Electrochemistry Co., Ltd., Taoyuan City 330 (TW)
(72) Inventor: HSIEH, Han-Wei, 330 Taoyuan City (TW)
(74) Representative: 2K Patentanwälte Blasberg Kewitz & Reichel

(57) **Abstract**

A cathode material (1) and a preparation thereof are disclosed. The cathode material (1) includes a core (10) and a coating layer (20) coated on the core (10). The core (10) is formed by a ternary material having a composition of Li[NiₓCo_{y}Mn_{z}]O₂, wherein x+y+z=1, 0.8<x<1, 0<y<0.2, and 0<z<0.2. The coating layer (20) is formed by an iron-phosphate compound material and includes a plurality of first particles (21) aggregated. With high nickel content in the core (10), the cathode material (1) with high energy density and low cost is realized. Since the iron-phosphate compound material has high-rate capability, the coating layer (20) formed thereby further improves the rate capability of the cathode material.

## Description

### FIELD OF THE INVENTION

The present disclosure relates to a cathode material of a secondary battery, and more particularly to a high-nickel cathode material with a coating layer and a preparation method thereof for reducing the costs and improving the power density and the rate capability at the same time.

### BACKGROUND OF THE INVENTION

In recent years, the performance requirements for the electric vehicles and the energy storage devices are increased, and the secondary batteries used therein are also required to have good performance. Among many types of batteries, lithium-ion batteries using the ternary cathode materials, such as nickel-cobalt-manganese (NCM), have the characteristics of high capacity and have become the mainstream choice at present.

Since the nickel content in the above-mentioned cathode material is directly proportional to its power density, and the price of cobalt metal fluctuates violently, the current mainstream development trend is to increase the nickel content in the cathode material to increase the power density and reduce manufacturing costs. However, the high-nickel cathode material has a problem of poor rate capability. As a result, it is difficult to apply the lithium-ion battery made by the high-nickel cathode material to the device with high discharge rate requirements.

Therefore, there is a need to provide a high-nickel cathode material with a coating layer and a preparation method thereof to reduce the costs, improve the power density and the rate capability, and obviate the drawbacks encountered by the prior arts.

### SUMMARY OF THE INVENTION

An object of the present disclosure is to provide a cathode material and a preparation method thereof. The cathode material includes a core and a coating layer coated on the core. The core is formed by a ternary material having a composition of Li[NiₓCo_{y}Mn_{z}]O₂, wherein x+y+z=1, 0.8<x<1, 0<y<0.2, and 0<z<0.2. With the high nickel content in the core, a high-power density and low-cost cathode material is realized. The coating layer is made of, for example, lithium iron phosphate (LiFePO₄, LFP) material or heterosite (FePO₄, H-FP) material, and includes a plurality of particles aggregated. Since the lithium iron phosphate material and the heterosite material have good rate capability, it facilitates the coating layer formed by them to improve the rate capability of the cathode material. Furthermore, a weight percentage of the coating layer in the cathode material is, for example, between 0.2 wt.% and 5 wt.%. That is, only by adding a small amount of iron-phosphate compound material, the coating layer is formed to improve the rate capability of the cathode material, further reduce the manufacturing cost. Each particle in the coating layer of the cathode material is further coated with a carbon-coating layer, so as to increase the electronic conductivity among the particles of the coating layer and enhance the performance of the cathode material.

Another object of the present disclosure is to provide a cathode material and a preparation method thereof. By mechanically mixing the ternary material with high-nickel content and the iron-phosphate compound material in a mechanical way such as mechanical fusion, a high-nickel cathode material with a coating layer is obtained. The mixing process includes a working temperature ranged from 25° C to 45° C, a mixing time ranged from 5 minutes to 25 minutes, and a rotation speed ranged 1000 rpm to 3000 rpm. For mixing the ternary material and the iron-phosphate compound material, the mixing method, the working temperature, the rotation speed and the mixing time are controlled. It facilitates the coating layer to prevent the structural defects caused by high temperature and excessive friction between the particles. At the same time, it avoids the formation of an overly dense coating layer, which layer makes it difficult for the electrolyte to infiltrate into the cathode material. Thereby, the low impedance and good charging and discharging performance of the cathode material are ensured.

In accordance with an aspect of the present disclosure, a cathode material is provided and includes a core and a coating layer. The coating layer covers the core. The core is formed by a ternary material. The ternary material has a composition of Li[NiₓCo_{y}Mn_{z}]O₂, wherein x+y+z=1, 0.8<x<1, 0<y<0.2, and 0<z<0.2. The coating layer is formed by an iron-phosphate compound material, and a plurality of first particles are aggregated to collaboratively form the coating layer.

In an embodiment, the core has an average particle diameter ranged from 4 µm to 15 µm.

In an embodiment, the iron-phosphate compound material includes lithium iron phosphate (LiFePO4, LFP) or heterosite (FePO4, H-FP).

In an embodiment, the plurality of first particles have an average particle diameter ranged from 0.1 µm to 3 µm.

In an embodiment, the cathode material further includes a carbon-coating layer coated on the first particles, wherein the carbon-coating layer has a thickness ranged from 3 nm to 10 nm.

In an embodiment, the core has a weight percentage ranged from 95 wt.% to 99.8 wt.% based on the total weight of the cathode material.

In an embodiment, the coating layer has a weight percentage ranged from 0.2 wt.% to 5 wt.% based on the total weight of the cathode material.

In an embodiment, the coating layer has a weight percentage ranged from 0.2 wt.% to 3 wt.% based on the total weight of the cathode material.

In accordance with another aspect of the present disclosure, a preparation method of a cathode material is provided and includes steps of: (a) providing a ternary material, wherein the ternary material has a composition of Li[NiₓCo_{y}Mn_{z}]O₂, wherein x+y+z=1, 0.8<x<1, 0<y<0.2, and 0<z<0.2; and (b) providing an iron-phosphate compound material and mixing the ternary material with the iron-phosphate compound material in a mechanical way to form the cathode material, wherein the cathode material comprises a core and a coating layer, and the core is formed by the ternary material, wherein the coating layer covers the core, the coating layer is formed by the iron-phosphate compound material, and a plurality of first particles are aggregated to collaboratively form the coating layer.

In an embodiment, the core has an average particle diameter ranged from 4 µm to 15 µm.

In an embodiment, the iron-phosphate compound material comprises lithium iron phosphate (LiFePO₄, LFP) or heterosite (FePO₄, H-FP).

In an embodiment, the plurality of first particles have an average particle diameter ranged from 0.1 µm to 3 µm.

In an embodiment, the cathode material further comprises a carbon-coating layer coated on the first particles, and the carbon-coating layer has a thickness ranged from 3 nm to 10 nm.

In an embodiment, the core has a weight percentage ranged from 95 wt.% to 99.8 wt.% based on the total weight of the cathode material.

In an embodiment, the coating layer has a weight percentage ranged from 0.2 wt.% to 5 wt.% based on the total weight of the cathode material.

In an embodiment, the coating layer has a weight percentage ranged from 0.2 wt.% to 3 wt.% based on the total weight of the cathode material.

In an embodiment, the mechanical way includes a mechanical fusion method.

In an embodiment, the ternary material and the iron phosphate compound material are mixed in the mechanical way for a time ranged from 5 minutes to 25 minutes.

In an embodiment, the mechanical way includes a rotational speed ranged from 1000 rpm to 3000 rpm.

In an embodiment, the mechanical way is performed at a working temperature ranged from 25 °C to 45 °C.

### BRIEF DESCRIPTION OF THE DRAWINGS

FIG. 1 is a schematic structural view illustrating a cathode material according to an embodiment of the present disclosure;

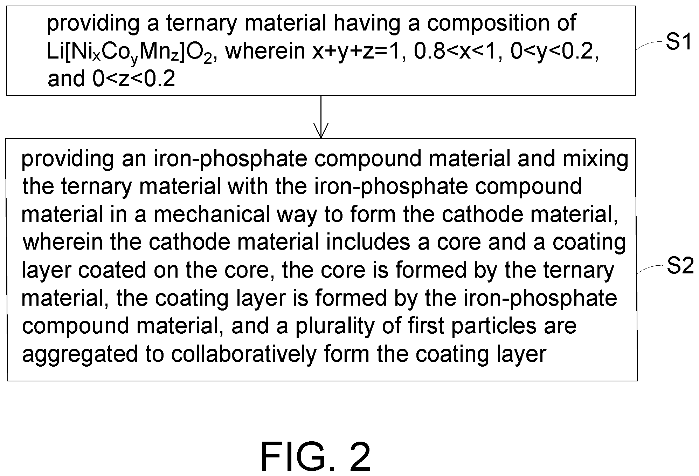

FIG. 2 is a flow chart of a preparation method of a cathode material according to an embodiment of the present disclosure;
FIG. 3A to FIG. 3B are SEM images illustrating of the cathode material in the comparative example;
FIG. 4A to FIG. 4B are SEM images of the cathode material in the first example of the present disclosure;
FIG. 5A to FIG. 5B are SEM images of the cathode material in the second example of the present disclosure;
FIG. 6A to FIG. 6B are SEM images of the cathode material in the third example of the present disclosure;
FIG. 7A to FIG. 7B are SEM images of the cathode material in the fourth example of the present disclosure;
FIG. 8A is a charging potential-capacity curves of the comparative example, the first example, the second example, the third example and the fourth example of the present disclosure;
FIG. 8B is a discharging potential-capacity curve diagram of the comparative example, the first example, the second example, the third example and the fourth example of the present disclosure;
FIG. 9A is an electrochemical impedance spectrum of the comparative example, the first example and the second example of the present disclosure;
FIG. 9B is an electrochemical impedance spectrum of the third example and the fourth example of the present disclosure;
FIG. 10A is a charging capacity retention rate vs. cycle number curve diagram of the comparative example and the first example and the second example;
FIG. 10B is a discharging capacity retention rate vs. cycle number curve diagram of the comparative example and the first example and the second example; and
FIG. 11 is a discharging capacity-cycle number curve diagram of the comparative example, the first example and the second example of the present disclosure at different charge and discharge rates.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, although the "first," "second," "third," and the like terms in the claims be used to describe the various elements can be appreciated, these elements should not be limited by these terms, and these elements are described in the respective embodiments are used to express the different reference numerals, these terms are only used to distinguish one element from another element. For example, a first element could be termed a second element, and, similarly, a second element could be termed a first element, without departing from the scope of example embodiments. Besides, "and / or" and the like may be used herein for including any or all combinations of one or more of the associated listed items. Alternatively, the word "about" means within an acceptable standard error of ordinary skill in the art-recognized average. In addition to the operation / working examples, or unless otherwise specifically stated otherwise, in all cases, all of the numerical ranges, amounts, values and percentages, such as the number for the herein disclosed materials, time duration, temperature, operating conditions, the ratio of the amount, and the like, should be understood as the word "about" decorator. Accordingly, unless otherwise indicated, the numerical parameters of the present invention and scope of the appended patent proposed is to follow changes in the desired approximations. At least, the number of significant digits for each numerical parameter should at least be reported and explained by conventional rounding technique is applied. Herein, it can be expressed as a range between from one endpoint to the other or both endpoints. Unless otherwise specified, all ranges disclosed herein are inclusive.

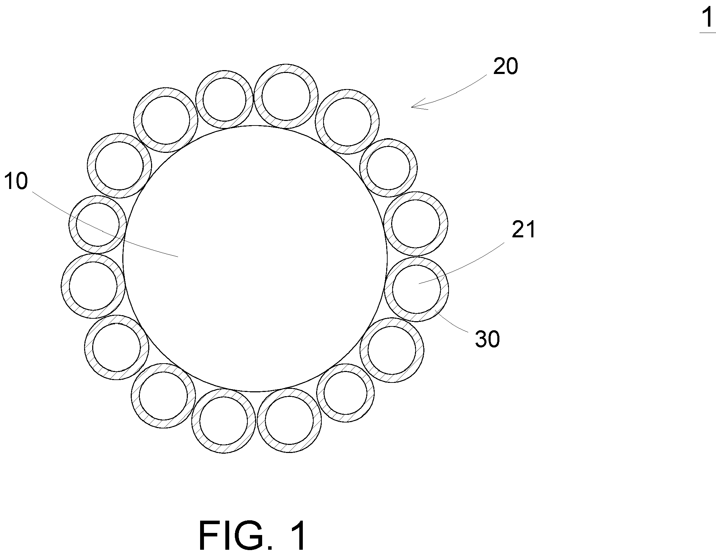

FIG. 1 is a schematic structural view illustrating a cathode material according to an embodiment of the present disclosure. In the embodiment, the cathode material 1 includes a core 10 and a coating layer 20. The coating layer 20 covers the core 10. In the embodiment, the core 10 is formed by a ternary material. The ternary material has a composition of Li[NiₓCo_{y}Mn_{z}]O₂, wherein x+y+z=1, 0.8<x<1, 0<y<0.2, and 0<z<0.2. In the embodiment, the coating layer 20 is formed by an iron-phosphate compound material, and a plurality of first particles 21 are aggregated to collaboratively form the coating layer 20. Preferably but not exclusively, in the embodiment, the ternary material is a lithium nickel cobalt manganese oxide (NCM), Li[NiₓCo_{y}Mn_{z}]O₂, and x=0.83, y=0.12, z=0.05. That is, the ratio of nickel, cobalt and manganese in the lithium nickel cobalt manganese oxide material is 83:12:5. Preferably but not exclusively, the lithium nickel cobalt manganese oxide material is prepared by a solid-state synthesis method, and have an average diameter (D50) ranged from 9 µm to 13 µm. The specific surface area is not more than 1 m²/g. The tap density is ranged from 2.5 g/ml to 3 g/ml. Preferably but not exclusively, in other embodiments, the ternary material can also be another lithium nickel cobalt manganese oxide (NCM) material with different composition ratios, and prepared by a sol-gel process. It should be noted that the types, the composition ratios, the material properties, and the manufacturing processes of the ternary materials in the present disclosure are adjustable according to the practical requirements. The present disclosure is not limited thereto, and not redundantly described herein. With the high nickel content in the core layer 10, a high-power density and low-cost cathode material 1 is achieved in the present disclosure.

In the embodiment, the iron-phosphate compound material is the lithium iron phosphate (LiFePO₄, LFP) or the heterosite (FePO₄, H-FP). Preferably but not exclusively, in the embodiment, the lithium iron phosphate material is prepared by a solid-state synthesis method. Preferably but not exclusively, the heterosite material is prepared by a liquid-phase reaction. The present disclosure is not limited thereto. Since the lithium iron phosphate material and the heterosite material have good rate capability, it facilitates the coating layer 20 formed by them to improve the rate capability of the cathode electrode material 1. Preferably but not exclusively, in the embodiment, the cathode material 1 further includes a carbon-coating layer 30 coated on the first particles 21, and the carbon-coating layer 30 has a thickness ranged from 3 nm to 10 nm. In this way, the electronic conductivity among the first particles 21 of the coating layer 20 is increased and the performance of the cathode material 1 is enhanced. Preferably but not exclusively, in the embodiment, the carbon-coating layer 30 of the cathode material 1 is composed of the carbon-coating layer on the iron-phosphate compound material produced through the carbon coating process. Preferably but not exclusively, the carbon coating process for the iron-phosphate compound materials includes mechanical mixing, spray drying and heat treatment. However, it is not an essential feature of the present disclosure, and not redundantly described herein.

In the embodiment, the core 10 has an average particle diameter ranged from 4 µm to 15 µm. The plurality of first particles 21 have an average particle diameter ranged from 0.1 µm to 3 µm. In the embodiment, the particle size of the core 10, and the particle size of the first particles 21 are measured through a scanning electro microscope (SEM). Notably, a transmission electron microscope (TEM) or other instruments capable of surface analysis is suitable for measuring the particle size of the core 10 and the particle size of the first particles 21. The present disclosure is not limited thereto.

In the embodiment, the core 10 has a weight percentage ranged from 95 wt.% to 99.8 wt.% based on the total weight of the cathode material 1. The coating layer 20 has a weight percentage ranged from 0.2 wt.% to 5 wt.% based on the total weight of the cathode material 1. Preferably but not exclusively, in other embodiments, the coating layer has a weight percentage ranged from 0.2 wt.% to 3 wt.% , and preferably from 0.2 wt.% to 1 wt. % based on the total weight of the cathode material 1. Preferably but not exclusively, in the embodiment, the weight percentage of the coating layer 20 in the cathode material 1 is 0.3 wt.%. It can be seen that only by adding a small amount of iron-phosphate compound material, the coating layer 20 is sufficiently formed on the cathode material 1 of the present disclosure to improve the rate capability of the cathode material, and further reduce the manufacturing cost.

According to the cathode material 1, the present disclosure further provides a preparation method of the cathode material 1. Firstly, as shown in the step S1, a ternary material composed of Li[NiₓCo_{y}Mn_{z}]O₂ is provided, where x+y+z=1, 0.8<x<1, 0<y<0.2, 0<z<0.2. Preferably but not exclusively, in the embodiment, the ternary material is a lithium nickel cobalt manganese oxide (NCM) material with the composition Li[NiₓCo_{y}Mn_{z}]O₂, and x=0.83, y=0.12, z=0.05. That is, the ratio of nickel, cobalt and manganese in the lithium nickel cobalt manganese oxide material is 83: 12:5. Preferably, the lithium nickel cobalt manganese oxide material is prepared by a solid-state synthesis method, and have an average diameter (D50) ranged from 9 µm to 13 µm. The specific surface area is not more than 1 m²/g. The tap density is ranged from 2.5 g/ml to 3 g/ml. Preferably but not exclusively, in other embodiments, the ternary material can also be another lithium nickel cobalt manganese oxide (NCM) material with different composition ratios, and prepared by a sol-gel process. It should be noted that the types, the composition ratios, the material properties, and the manufacturing processes of the ternary materials in the present disclosure are adjustable according to the practical requirements. The present disclosure is not limited thereto, and not redundantly described herein. With the high nickel content in the core layer 10, a high-power density and low-cost cathode material 1 is achieved in the present disclosure.

Furthermore, as shown in the step S2, an iron-phosphate compound material is provided. Moreover, the ternary material and the iron-phosphate compound material are mixed in a mechanical way to form the cathode material 1. In the embodiment, the cathode material 1 includes a core 10 and a coating layer 20 coated on the core 10. The core 10 is formed by the ternary material, the coating layer is formed by the iron-phosphate compound material, and a plurality of first particles 21 are aggregated to collaboratively form the coating layer 20. Preferably but not exclusively, in the embodiment, the mechanical way includes a mechanical fusion method. The mechanical way is performed at a working temperature ranged from 25 °C to 45 °C. Moreover, the mechanical way includes a rotational speed ranged from 1000 rpm to 3000 rpm. The ternary material and the iron phosphate compound material are mixed in the mechanical way for a time ranged from 5 minutes to 25 minutes. Preferably but not exclusively, in the embodiment, the rotational speed of the mechanical way is 2000 rpm, and the ternary material and the iron phosphate compound material are mixed in the mechanical way for 15 minutes. The present disclosure is not limited thereto. Since the mixing method, the working temperature, the rotation speed and the mixing time for mixing the ternary material and the iron phosphate compound material are controlled. It facilitates the coating layer 20 to prevent the structural defects caused by high temperature and excessive friction between the particles. At the same time, it avoids the formation of an overly dense coating layer 20, which layer makes it difficult for the electrolyte to infiltrate into the cathode material 1. Thereby, the low impedance and good charging and discharging performance of the cathode material 1 are ensured.

The preparation process and the effects of the present disclosure are further described in detail below through a comparative examples and demonstration examples.

### Comparative example:

The comparative example is a cathode material made of a ternary material. The ternary material of the comparative example is a lithium nickel cobalt manganese oxide (NCM) material with the composition Li[NiₓCo_{y}Mn_{z}]O₂, and x=0.826, y=0.124, z=0.05. That is, the ratio of nickel, cobalt and manganese in the lithium nickel cobalt manganese oxide material is 82.6:12.4:5. The ternary material in the comparative example have an average diameter (D50) of 9.85 µm. The specific surface area is 0.27 m²/g, and the tap density is 2.94 g/ml.

### First example:

The first example is the cathode material obtained in the following manner. Firstly, a ternary material is provided. The ternary material of the first example is lithium nickel cobalt manganese oxide (NCM) material composed of Li[NiₓCo_{y}Mn_{z}]O₂, and has the same composition ratio and material properties as the ternary material of the comparative example. It is not redundantly described herein.

Furthermore, the ternary material and the iron-phosphate compound material are mixed in the mechanical way to obtain the positive electrode material 1. The iron-phosphate compound material of the first example is the heterosite (FePO₄, H-FP), and the molar ratio of the ternary material and the iron-phosphate compound material is 1:0.03. The mechanical way for the first example is the mechanical fusion method, the working temperature is ranged from 25° C to 45° C, the rotational speed is 2000 rpm, and the mixing time is 15 minutes. During the mixing process, the working temperature is cooled by water cooling.

On the other hand, the preparation method of heterosite is as follows. Firstly, the lithium iron phosphate mixed with the water is stirred evenly, and the peracetic acid (PAA) is gradually added at a constant flow rate to form a mixture. Then, after standing the mixture for a period of time, the mixture is filtered, and heated to dry under an inert gas atmosphere, so as to obtain the heterosite in the first example.

### Second example:

The preparation method of the second example is roughly similar to that of the first example. Preferably, the iron-phosphate compound material of the second example is the lithium iron phosphate (LiFePO₄, LFP), and the mixing time is 15 minutes.

### Third example:

The preparation method of the third example is roughly similar to that of the first example. Preferably, the iron-phosphate compound material of the third example is the heterosite (FePO₄, H-FP), and the mixing time is 30 minutes. The preparation method of heterosite in the third example is the same as that of heterosite in the first example.

### Fourth example:

The preparation method of the fourth example is roughly similar to that of the second example. Preferably, the iron-phosphate compound material of the fourth example is the lithium iron phosphate (LiFePO₄, LFP), and the mixing time is 30 minutes.

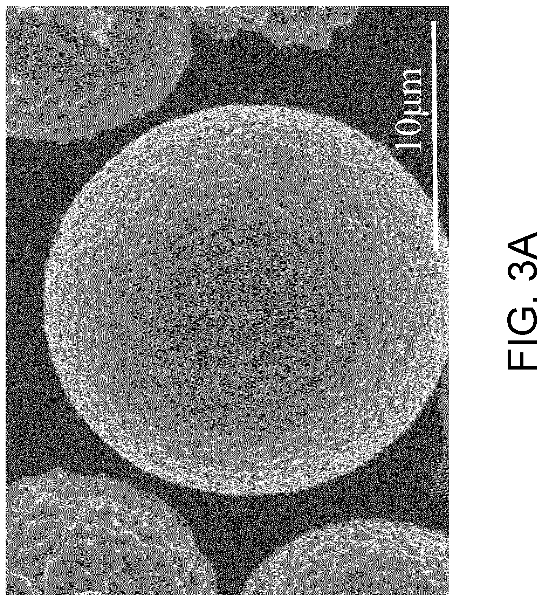

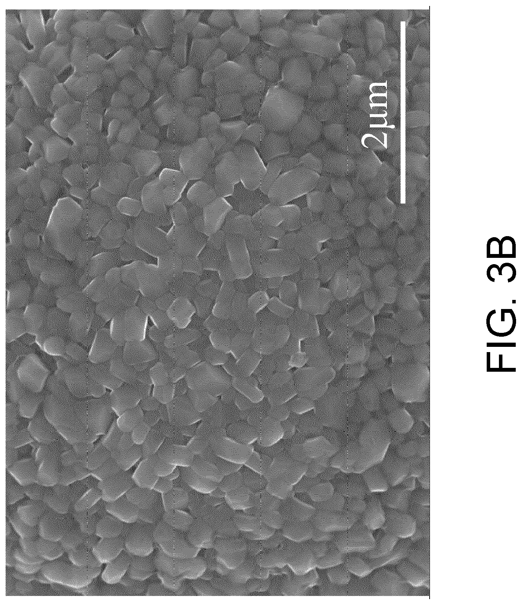

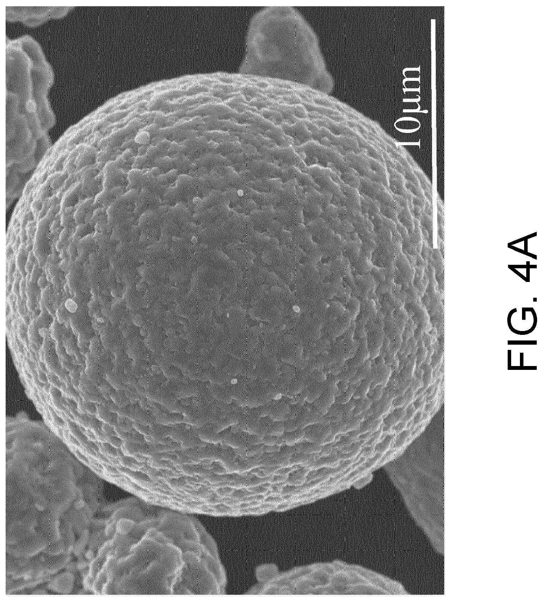

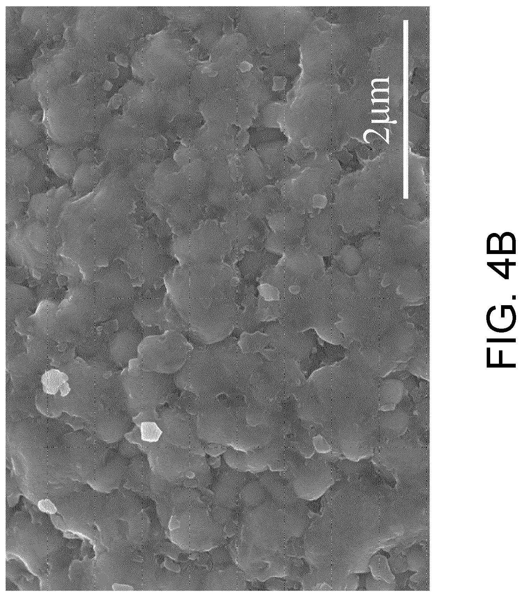

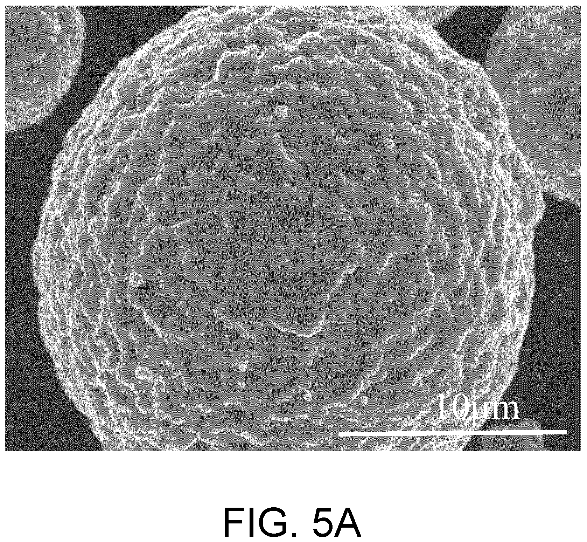

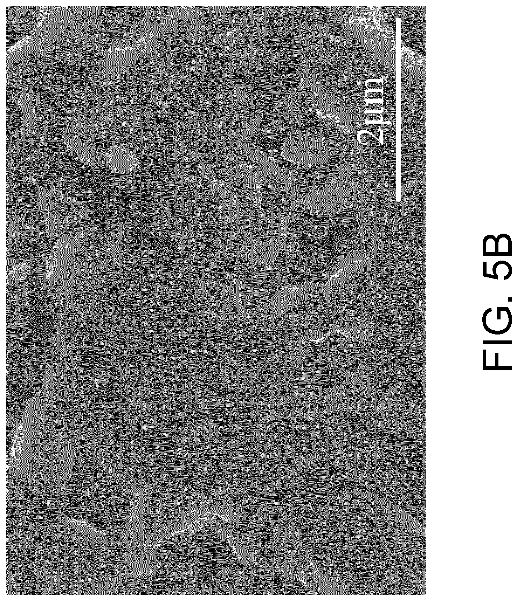

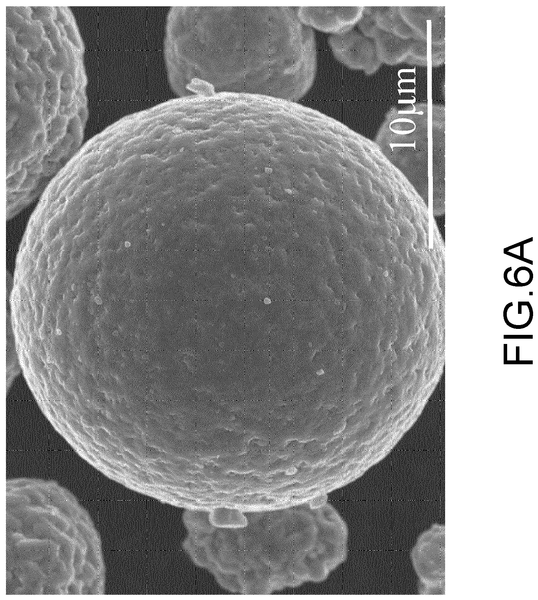

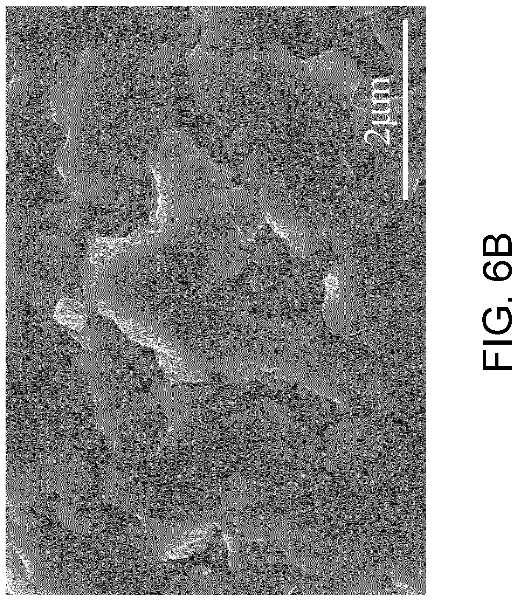

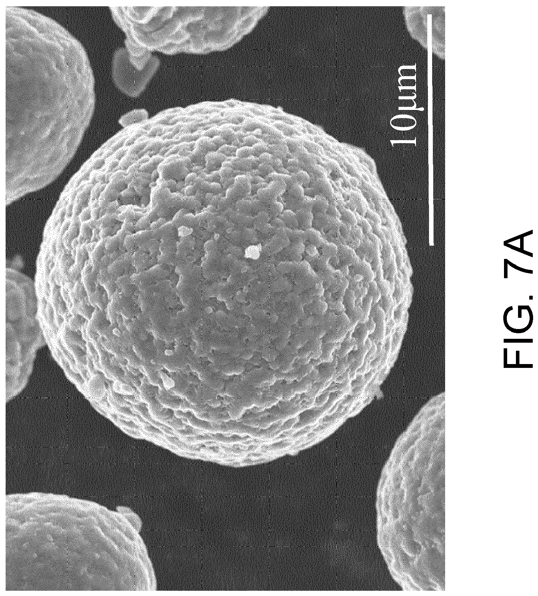

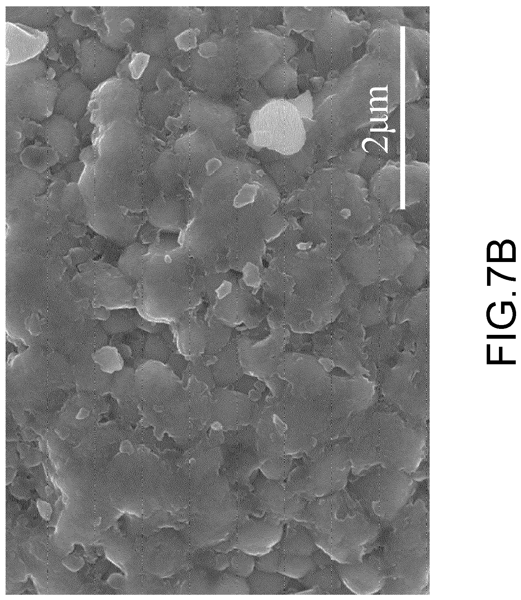

FIG. 3A to FIG. 3B are SEM images illustrating of the cathode material in the comparative example. FIG. 4A to FIG. 4B are SEM images of the cathode material in the first example of the present disclosure. FIG. 5A to FIG. 5B are SEM images of the cathode material in the second example of the present disclosure. FIG. 6A to FIG. 6B are SEM images of the cathode material in the third example of the present disclosure. FIG. 7A to FIG. 7B are SEM images of the cathode material in the fourth example of the present disclosure. As shown in FIG. 4A to FIG. 7B, in the cathode material 1 of the present disclosure, the core 10 has an average particle diameter ranged from 4 µm to 15 µm, and the first particles 21 have an average particle diameter ranged from 0.1 µm to 3 µm. At the same time, compared with the first example and the second example whose mixing time is 15 minutes, the structures of the coating layer 20 of the third example and the fourth example with the mixing time of 30 minutes are relatively dense. Therefore, by controlling the mixing time for mixing the ternary material and the iron phosphate compound material, it allows to avoid the formation of an overly dense coating layer 20, which layer makes it difficult for the electrolyte to infiltrate into the cathode material 1. Thereby, the low impedance and good charging and discharging performance of the cathode material 1 are ensured.

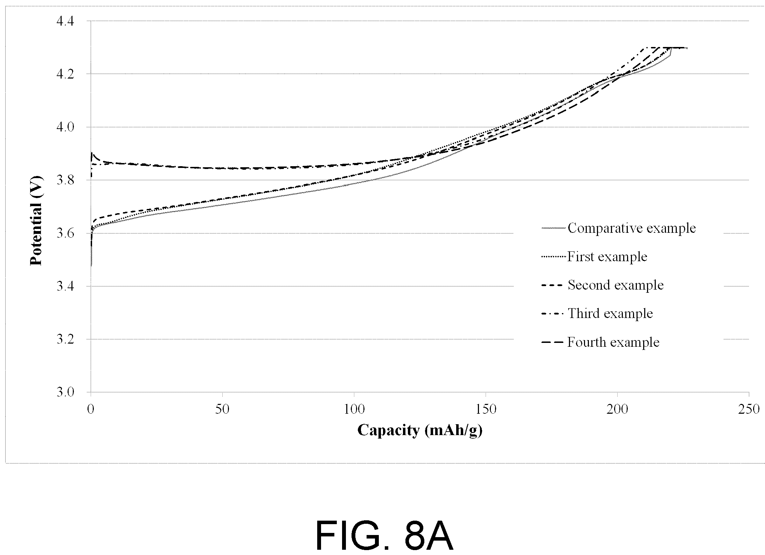

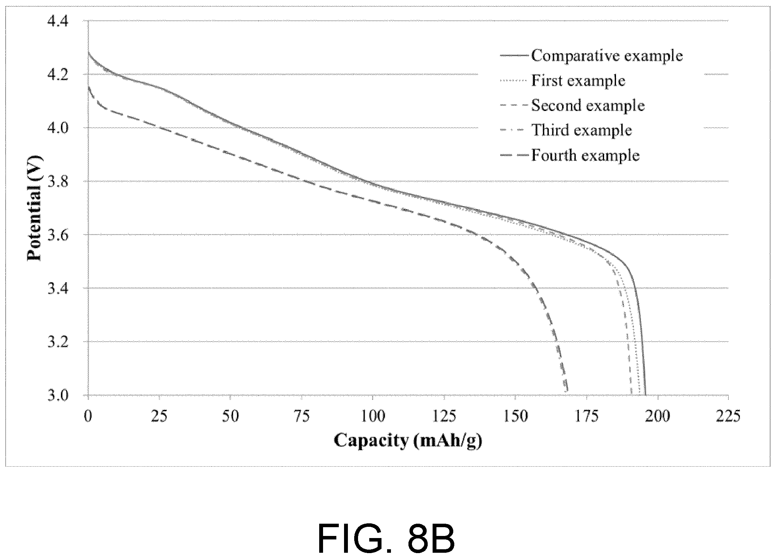

FIG. 8A is a charging potential-capacity curves of the comparative example, the first example, the second example, the third example and the fourth example of the present disclosure. FIG. 8B is a discharging potential-capacity curve diagram of the comparative example, the first example, the second example, the third example and the fourth example of the present disclosure. The materials of the comparative example, the first example, the second example, the third example and the fourth example of the present disclosure are used to make button batteries and then tested at a C-rate of 0.1C, so as to obtained the results shown in FIG. 8A and FIG. 8B. The positive electrode sheet of the button battery is made of the cathode material, the co-conductor and the binder in a ratio of 90:5:5. The negative electrode of the button battery is lithium metal, and the separator is Celgard 2320. The electrolyte of the button battery includes 1.2 M lithium hexafluorophosphate (LiPF₆), ethylene carbonate (EC), diethyl carbonate (DEC), methyl ethyl carbonate (EMC) and 2 wt.% fluoroethylene carbonate (FEC). The testing results are further compared in Table 1 below. As shown in FIG. 8A, FIG. 8B and Table 1, the charging and discharging capabilities of the first example and the second example with a mixing time of 15 minutes are not significantly different from those of the comparative example. Furthermore, compared with the comparative example, the third example and fourth example with the mixing time of 30 minutes have a lower discharging voltage plateau and a lower first-cycle discharging capacity. The charging and discharging capacity of the third example and the fourth example with the mixing time 30 minutes a lower discharge voltage platform and a lower discharging capacity in the first circle. It can be seen that, by controlling the mixing time of the ternary material and the iron-phosphate compound material, the cathode material 1 of the present disclosure further prevents the structural defects of the coating layer 20 caused by excessive friction between the particles, thereby ensuring the good charging and discharging performance of the cathode material 1.

**Table 1**

| | Capacity (mAh/g) | Change ratio of capacity compared to comparative example |
|---|---|---|
| Comparative example | 195.6 | - |
| First example | 193.6 | -1.02% |
| Second example | 190.9 | -2.40% |
| Third example | 167.7 | -14.26% |
| Fourth example | 168.5 | -13.85% |

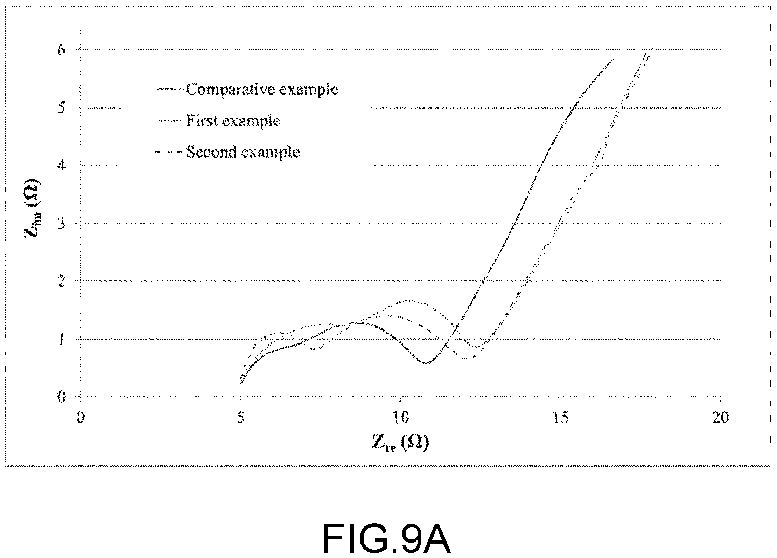

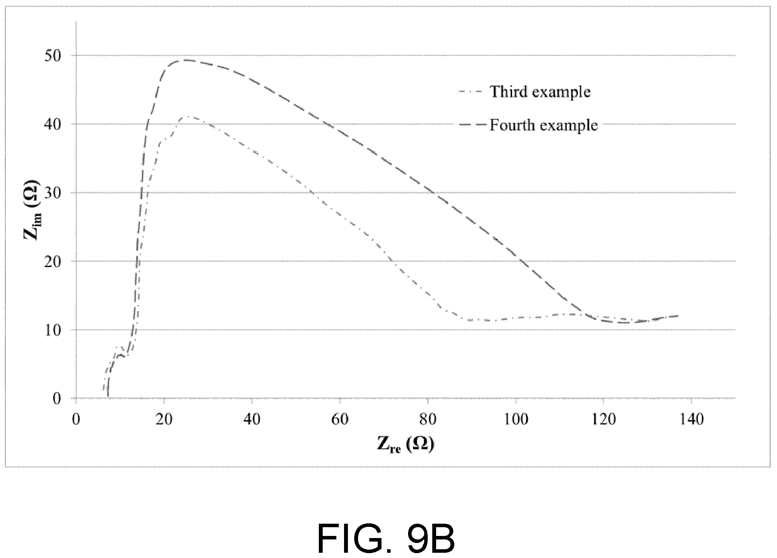

FIG. 9A is an electrochemical impedance spectrum of the comparative example, the first example and the second example of the present disclosure. FIG. 9B is an electrochemical impedance spectrum of the third example and the fourth example of the present disclosure. FIG. 9A and FIG. 9B are obtained by testing the button batteries made by the comparative example, the first example, the second example, the third example and the fourth example of the present disclosure, respectively. As shown in FIG. 9A and FIG. 9B, the impedance of the first example and the second example with the mixing time of 15 minutes is not significantly different from that of the comparative example. However, compared with the comparative example, the third example and the fourth example with the mixing time of 30 minutes present significantly larger impedance. It can be seen that, by controlling the mixing time of the ternary material and the iron-phosphate compound material, the cathode material 1 of the present disclosure further prevents the structural defects of the coating layer 20 caused by excessive friction between the particles, thereby ensuring the low impedance of the cathode material 1.

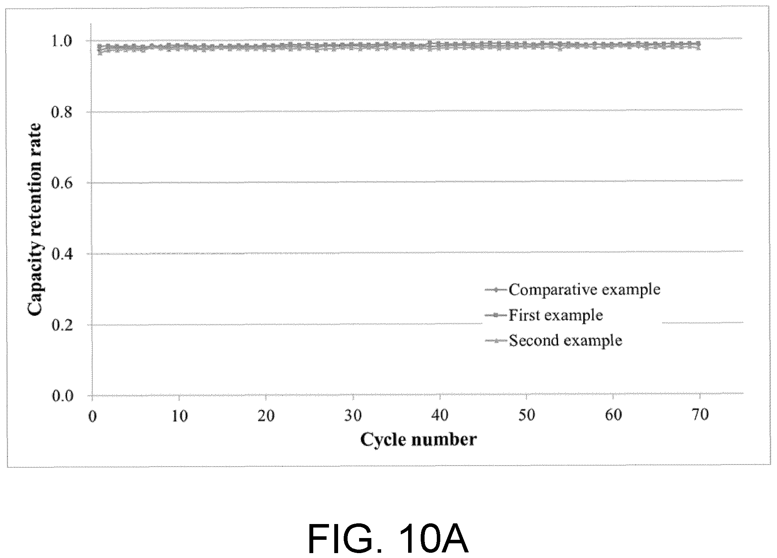

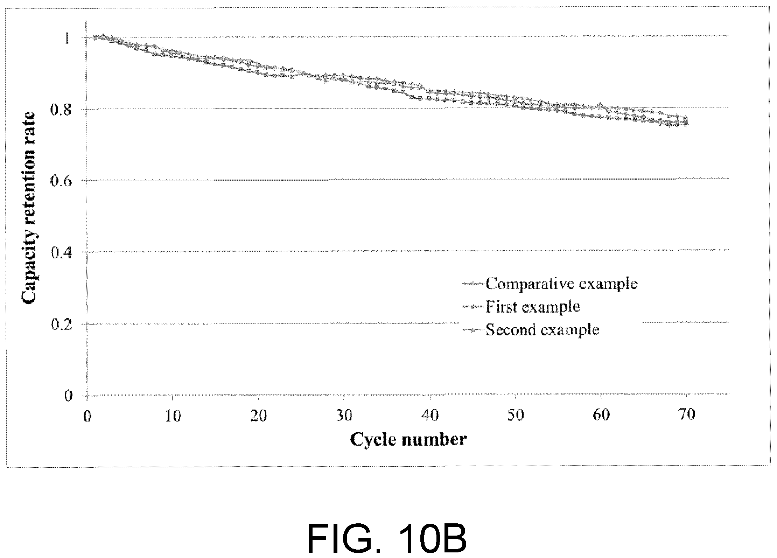

FIG. 10A is a charging capacity retention rate vs. cycle number curve diagram of the comparative example and the first example and the second example. FIG. 10B is a discharging capacity retention rate vs. cycle number curve diagram of the comparative example and the first example and the second example. FIG. 10A and FIG. 10B are obtained by testing the button batteries made by the comparative example, the first example and the second example of the present disclosure, respectively, at a C-rate of 1C. As shown in FIG. 10A and FIG. 10B, there is no significant difference in cycle life between the first example and the second example of the present disclosure and the comparative example.

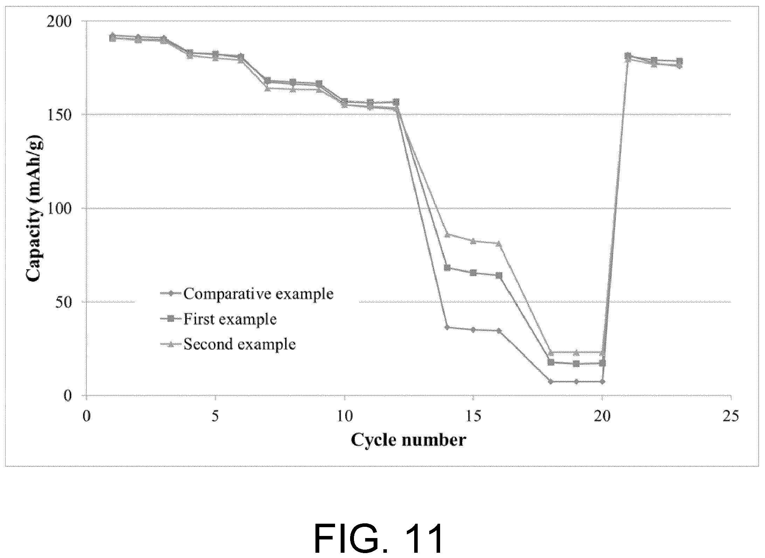

FIG. 11 is a discharging capacity-cycle number curve diagram of the comparative example, the first example and the second example of the present disclosure at different charge and discharge rates. FIG. 11 is obtained by testing the button batteries made by the comparative example, the first example and the second example of the present disclosure, respectively. Each testing button battery is charged and discharged for 3 cycles at the C-rates of 0.1 C, 0.2 C, 0.5 C and 1 C in sequence, then charged and discharged at 1C charging/3C discharging for 3 cycles, 1C charging/5C discharging for 3 cycles, and finally charged and discharged at 0.1C for 3 cycles. The testing results of 3C discharging are further compared in Table 2 below. Moreover, the testing results of 5C discharging are further compared in Table 3 below. As shown in FIG. 11, under the conditions of the C-rates of 0.1C, 0.2C, 0.5C and 1C, there is no significant difference in the capacity performance between the first example, the second example and the comparative example. However, under the conditions of 1C charging/3C discharging, and 1C charging/5C discharging, the capacity performances of the first example and the second example are obviously better than that of the comparative example. As shown in Table 2, at the discharging rate of 3C, the capacity of the first example and the capacity of the second example are increased by 86.2% and 134.8%, respectively, when compared with the comparative example. The amount of improvement is about double. As shown in Table 3, at the discharging rate of 5 C, the capacity of the first example and the capacity of the second example are increased by 134.8% and 213.1%, respectively, when compared with the comparative example. The amount of improvement is about one to two times. It can be seen that in the present disclosure, the iron-phosphate material with good rate capability is used to form the coating layer 20, which can significantly improve the rate capability of the cathode material 1. Furthermore, the weight percentage of the coating layer 20 in the cathode material 1 is ranged from 0.2 wt.% to 5 wt.%, which means that only a small amount of iron phosphate compound material is added to form the coating layer 20 for improving the rate capability of the cathode material 1. The manufacturing cost is reduced.

**Table 2**

| | Capacity at the discharging rate of 3C (mAh/g) | Change ratio of capacity compared to comparative example |
|---|---|---|
| Comparative example | 35.47 | - |
| First example | 66.04 | 86.2 % |
| Second example | 83.28 | 134.8 % |

**Table 3**

| | Capacity at the discharging rate of 5C (mAh/g) | Change ratio of capacity compared to comparative example |
|---|---|---|
| Comparative example | 7.39 | - |
| First example | 17.35 | 134.8 % |
| Second example | 23.14 | 213.1 % |

In summary, the present disclosure provides a cathode material and a preparation method thereof. The cathode material includes a core and a coating layer coated on the core. The core is formed by a ternary material having a composition of Li[NiₓCo_{y}Mn_{z}]O₂, wherein x+y+z=1, 0.8<x<1, 0<y<0.2, and 0<z<0.2. With the high nickel content in the core, a high-power density and low-cost cathode material is realized. The coating layer is made of, for example, lithium iron phosphate (LiFePO₄, LFP) material or heterosite (FePO₄, H-FP) material, and includes a plurality of particles aggregated. Since the lithium iron phosphate material and the heterosite material have good rate capability, it facilitates the coating layer formed by them to improve the rate capability of the cathode material. Furthermore, a weight percentage of the coating layer in the cathode material is, for example, between 0.2 wt.% and 5 wt.%. That is, only by adding a small amount of iron-phosphate compound material, the coating layer is formed to improve the rate capability of the cathode material, further reduce the manufacturing cost. Each particle in the coating layer of the cathode material is further coated with a carbon-coating layer, so as to increase the electronic conductivity among the particles of the coating layer and enhance the performance of the cathode material. By mechanically mixing the ternary material with high-nickel content and the iron-phosphate compound material in a mechanical way such as mechanical fusion, a high-nickel cathode material with a coating layer is obtained. The mixing process includes a working temperature ranged from 25° C to 45° C, a mixing time ranged from 5 minutes to 25 minutes, and a rotation speed ranged 1000 rpm to 3000 rpm. For mixing the ternary material and the iron-phosphate compound material, the mixing method, the working temperature, the rotation speed and the mixing time are controlled. It facilitates the coating layer to prevent the structural defects caused by high temperature and excessive friction between the particles. At the same time, it avoids the formation of an overly dense coating layer, which layer makes it difficult for the electrolyte to infiltrate into the cathode material. Thereby, the low impedance and good charging and discharging performance of the cathode material are ensured.

## Claims

1. A cathode material (1), **characterized by** comprising:
a core (10) formed by a ternary material, wherein the ternary material has a composition of Li[NiₓCo_{y}Mn_{z}]O₂, wherein x+y+z=1, 0.8<x<1, 0<y<0.2, and 0<z<0.2; and
a coating layer (20) covering the core, wherein the coating layer is formed by an iron-phosphate compound material, and a plurality of first particles (21) are aggregated to collaboratively form the coating layer.

2. The cathode material (1) according to claim 1, wherein the core (10) has an average particle diameter ranged from 4 µm to 15 µm.

3. The cathode material (1) according to claim 1 or 2, wherein the iron-phosphate compound material comprises lithium iron phosphate (LiFePO₄, LFP) or heterosite (FePO₄, H-FP).

4. The cathode material (1) according to any of the preceding claims, wherein the plurality of first particles (21) have an average particle diameter ranged from 0.1 µm to 3 µm.

5. The cathode material (1) according to any of the preceding claims, further comprising a carbon-coating layer (30) coated on the first particles (21), wherein the carbon-coating layer (30) has a thickness ranged from 3 nm to 10 nm.

6. The cathode material (1) according to any of the preceding claims, wherein the core (10) has a weight percentage ranged from 95 wt.% to 99.8 wt.% based on the total weight of the cathode material (1), wherein the coating layer (20) has a weight percentage ranged from 0.2 wt.% to 5 wt.% based on the total weight of the cathode material (1).

7. The cathode material according to claim 6, wherein the coating layer (20) has a weight percentage ranged from 0.2 wt.% to 3 wt.% based on the total weight of the cathode material (1).

8. A preparation method of a cathode material (1), **characterized by** comprising steps of:
(a) providing a ternary material, wherein the ternary material has a composition of Li[NiₓCo_{y}Mn_{z}]O₂, wherein x+y+z=1, 0.8<x<1, 0<y<0.2, and 0<z<0.2; and
(b) providing an iron-phosphate compound material and mixing the ternary material with the iron-phosphate compound material in a mechanical way to form the cathode material (1), wherein the cathode material (1) comprises a core (10) and a coating layer (20), and the core (10) is formed by the ternary material, wherein the coating layer (20) covers the core (10), the coating layer (20) is formed by the iron-phosphate compound material, and a plurality of first particles (21) are aggregated to collaboratively form the coating layer (20).

9. The preparation method of the cathode material (1) according to claim 8, wherein the core (10) has an average particle diameter ranged from 4 µm to 15 µm.

10. The preparation method of the cathode material (1) according to claim 8 or 9, wherein the iron-phosphate compound material comprises lithium iron phosphate (LiFePO₄, LFP) or heterosite (FePO₄, H-FP).

11. The preparation method of the cathode material (1) according to any of claims 8 to 10, wherein the plurality of first particles (21) have an average particle diameter ranged from 0.1 µm to 3 µm, wherein the cathode material (1) further comprises a carbon-coating layer (30) coated on the first particles (21), and the carbon-coating layer (30) has a thickness ranged from 3 nm to 10 nm.

12. The preparation method of the cathode material (1) according to any of claims 8 to 11, wherein the core (10) has a weight percentage ranged from 95 wt.% to 99.8 wt.% based on the total weight of the cathode material (1), wherein the coating layer (20) has a weight percentage ranged from 0.2 wt.% to 5 wt.% based on the total weight of the cathode material (1).

13. The preparation method of the cathode material (1) according to claim 12, wherein the coating layer (20) has a weight percentage ranged from 0.2 wt.% to 3 wt.% based on the total weight of the cathode material (1).

14. The preparation method of the cathode material (1) according to any of claims 8 to 13, wherein the mechanical way includes a mechanical fusion method, wherein the ternary material and the iron phosphate compound material are mixed in the mechanical way for a time ranged from 5 minutes to 25 minutes.

15. The preparation method of the cathode material (1) according to any of claims 8 to 14, wherein the mechanical way includes a rotational speed ranged from 1000 rpm to 3000 rpm, wherein the mechanical way is performed at a working temperature ranged from 25 °C to 45 °C.
